(19) Europäisches Patentamt
European Patent Office
Office européen des brevets

(11) EP 2 669 798 A1

(12) **EUROPEAN PATENT APPLICATION**

(43) Date of publication:
**04.12.2013 Bulletin 2013/49**

(51) Int Cl.:
***G06F 9/50*** (2006.01)

(21) Application number: **12305600.4**

(22) Date of filing: **31.05.2012**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | • **Schefczik, Peter**<br>**91056 Erlangen (DE)** |
| (71) Applicant: **Alcatel Lucent**<br>**75007 Paris (FR)** | (74) Representative: **2SPL Patentanwälte**<br>**Postfach 15 17 23**<br>**80050 München (DE)** |
| (72) Inventors:<br>• **Derakhshan, Fariborz**<br>**90491 Nürnberg (DE)** | <u>Remarks:</u><br>Amended claims in accordance with Rule 137(2) EPC. |

(54) **Load distributor, intra-cluster resource manager, inter-cluster resource manager, apparatus for processing base band signals, method and computer program for distributing load**

(57) Embodiments relate to a load distributor, an intra-cluster resource manager, an intercluster resource manager, an apparatus for processing base band signals, a method and a computer program for distributing load. The load distributor 10 is operable to distribute processing requests in an environment comprising a plurality of processors 20. The load distributor 10 is further operable to assign a processing request to the plurality of processors 20 based on a state of load of the plurality of processors 20 and based on a predetermined distribution criterion.

Fig. 1

EP 2 669 798 A1

**Description**

Embodiments of the present invention relate to processing systems, more particularly but not exclusively to cloud computing systems in communication systems.

Background

Demands for higher data rates for mobile services are steadily increasing. At the same time modem mobile communication systems as 3rd Generation systems (3G) and 4th Generation systems (4G) provide enhanced technologies, which enable higher spectral efficiencies and allow for higher data rates and cell capacities. Users of today's handhelds become more difficult to satisfy. While old feature phones generated only data or voice traffic, current smartphones, tablets, and netbooks run various applications in parallel that can fundamentally differ from each other. Compared to conventional phones, this application mix leads to a number of new characteristics. For example, highly dynamic load statistics result, where the average load is increasing.

Data demands are increasing, which places higher demands on data networks in general. For example, the number of data servers and routers in the World Wide Web (WWW) or Internet is also steadily growing. In order to provide processing capabilities for the increasing data traffic network architectures are developing towards distributed systems, where the processing units, such as processors, Digital Signal Processors (DSP), routing processors, etc. are centralized or concentrated on one or more locations on the one hand, and processing resources throughout the network are made accessible in a universal way on the other hand. That is to say that processing tasks or requests may not be processed at the location where they occur, but somewhere else in the network, which then appears as a network cloud or a cloud of processing resources.

Processing requests are then satisfied in the distributed structure. Resource allocation problems in distributed systems like cloud environments, e.g. mobile and fixed networks, may occur. The resource allocation strategies applied in traditional networks of today with rigid interconnectivity may not be able to cope with the new networking paradigms, which are based on virtualized connectivity.

One application of such cloud networks is a mobile cloud Radio Access Network (RAN) scenario. In conventional base station transceivers BaseBand processing Units (BBUs) are rigidly coupled with the antennas leading to a suboptimum usage of resources. The decoupling of BBUs from the High Frequency (HF) front ends, which are also referred to as Remote Radio Units (RRUs), allows for collecting the BBU resources in a virtual baseband processing pool and flexibly assign them according to the arriving requests. Another application of cloud networks is a data center scenario where, as above, the processing resources within the data centers are aggregated in a virtual pool and dynamically assigned to incoming requests.

Summary

Embodiments are based on the finding that "cloudification" may follow the virtualization paradigm based on resource pooling and abstraction. In the context of traditional communication networks the allocation of processing units to resource requests is more or less fixed. It is another finding that a better or even optimum dynamic allocation of processing resources to resource demands that arrive in a virtualized heterogeneous resource pool may be desirable. Embodiments may therefore provide a flexible adaptation concept, which can enable a better or even maximum exploitation of processing resources with high allocation efficiency. Embodiments may be versatile and they may allow for application in diverse heterogeneous systems with different kinds of quality measures and policies to control, improve or even optimize dynamic resource selection.

Embodiments may provide apparatuses, methods or algorithms to allocate network resources instantaneously to processing requests in an improved or even optimum manner without a-priori knowledge of the arriving request sizes and arrival times. Embodiments may provide an integrated solution that copes with the diametrically opposing strategies of load balancing and load concentration. For each strategy embodiments may dynamically adapt to different network conditions, for example, relaxed, intermediate and stressed load conditions. Embodiments may assign incoming resource requests, i.e. requests for processing resources, to a set of processors such that either the necessary number of processing units is low or even minimized (load concentration) or the processing load on all processing units is balanced (load balancing). Load concentration therefore refers to a strategy where the processing is rather concentrated on a few processing resources such that other resources can be kept idle.

The more processing resources can be kept idle or unused, the more energy or power can be saved. Hence, load concentration is a strategy targeting power efficient processing. Load balancing differs from load concentration in that a use of multiple processing resources is made at low individual load rather than using some of the processing resources at high or maximum capability. Hence, the individual processing tasks can be processed faster. Load balancing is therefore targeting Quality of Service (QoS) in that the processing time per processing request is kept low or at minimum, which is due to a lower average load of the processing resources. Load balancing may help reducing bottlenecks and remote processing, i.e. utilization of processing resources of other clusters due to overload of the local cluster. In other words load balancing may reduce overprovisioning of processing resources with incoming processing requests and may therewith reduce bottlenecks. At the same time it may reduce a need for remote resource allocation, such as inter-cluster allocations, which prolong the overall serving time of a processing request. Load balancing may thereby reduce the average serving time of a processing request.

Embodiments provide a load distributor for distributing processing requests in an environment comprising a plurality of processors. In other words, embodiments provide an entity, which assigns incoming processing requests to processing capabilities. The processing capabilities can be established by means of a plurality of processors, for example, in a cloud environment. The plurality of processors may be comprised on boards, such as a multiprocessor boards, it may be comprised in multiple processor boards, for example, a plurality of processing boards with a plurality of processors each, or the plurality of processors may correspond to a structure with multiple, potentially distanced computers, each carrying one more processors. The load distributor is operable to assign a processing request to the plurality of processors based on a state of load of the plurality of processors and based on a predetermined distribution criterion. In other words, in embodiments the load distributor may base assignment decisions on processing requests on the load status of the processing capabilities or processors and on a predetermined distribution criterion, which may specify a target load condition or distribution.

In embodiments the predetermined distribution criterion may, for example, correspond to a load balancing criterion or a load concentration criterion. As it has already been explained above, if the load distribution criterion corresponds to load balancing, then the load distributor may target to even out an average load among the processing capabilities, i.e. among the plurality of processors. If the predetermined distribution criterion corresponds to load concentration, then the load distributor may try to concentrate the processing to as few processors as possible, in order to keep as many processors in idle or unused mode as possible. The processors in idle or unused mode may even be switched off, e.g., for energy conservation purposes. Moreover, CAPital Expenditures (CAPEX) and OPerational EXpenditures (OPEX) may be reduced when using load concentration.

In embodiments, the load distributor can be operable to distinguish at least two different states of load of the plurality of processors. The state of load of the processors may correspond to a relative measure determining to what extent the processors capabilities are occupied based on the processors full capacity. In other embodiments the state of load may correspond to an absolute measure, e.g. determining what absolute capacity is occupied, for example, in terms of Mega FLoating-point OPerations (MFLOPs). In other embodiments the state of load may correspond to a remaining processing capability, for example, MFLOPs a processor has available before reaching its full processing capacity or capability. In other words, the load distributor may monitor the processing capabilities of the plurality of processors in order to enable decisions on processing request distributions, which may make efficient use of the plurality of processors in line with the predetermined distribution criterion.

In other embodiments the state of load may be determined by the inter-arrival rate of the processing requests. In other words the state of load of the plurality of processors corresponds to a number of processing requests arriving in a predetermined time interval. This state of load variant may also be relative to an average allocation time per processing request to the respective processing resources, which may also be influenced by the individual loads of the processors. That is to say in some embodiments the state of load can be based on a number of arriving processing requests in a predetermined time interval. The state of load in these embodiments is also referred to as occurrence rate of processing requests, which can be absolute or relative.

In embodiments the load distributor may distinguish multiple states of load of the plurality of processors. In some embodiments one of the at least two states may correspond to a relaxed state and another one of the at least two states of load may correspond to a stressed state.

The processing load of the plurality of processors is higher in the stressed state than in the relaxed state. In other embodiments the inter-arrival time of processing requests is shorter in the stressed state than in the relaxed state. That is to say the occurrence rate of the processing requests is higher in the stressed state than in the relaxed state. In other words, in some embodiments the load distributor may base the processing request distributions on whether the plurality of processors is in stressed mode or in relaxed mode. For example, a load threshold may be predefined in terms of an absolute or a relative load, wherein the plurality of processors is considered in stressed mode, when the load of the processors lies above the threshold and the plurality of processors is considered to be in relaxed mode, when the load of the plurality of processors lies below the threshold. The load of the plurality of processors may be determined by an overall load of all of the plurality of processors, it may be determined in terms of a subset of the plurality of processors, for example, only the processors which are actually in use. Hence, in some embodiments, especially when the predetermined distribution criterion corresponds to load concentration, there may be a subset of processors, which is operated at high loads. Another subset of processors may be switched off or idle. In such embodiments, the load of the plurality of processors may be determined by the number of highly loaded processors compared to the number of unused processors. In other embodiments, the state of load may be determined by the load that is processed by the occupied processors compared to the load the unused processors could process.

In further embodiments, multiple other states of load may be distinguished. In some embodiments a third state of load may correspond to an intermediate state, in which the processing load of the plurality of processors is higher than in the relaxed state and lower than in the stressed state. In some embodiments the inter-arrival time of processing requests in the intermediate state is shorter than in the relaxed state and longer than in the stressed state. In other words the occurrence rate of the processing requests is higher than in the relaxed state and lower than in the stressed state. That is to say in some embodiments three states or conditions of the plurality of processing resources or processors are distinguished, a low load condition, which is also referred to as relaxed mode or state, an intermediate state, and a stressed state in which the load or occurrence rate is high.

In embodiments the load distributor can be operable, when in stressed state, to form a sequence of at least a subset of the plurality of processors. That is to say, when in stressed state, the load that is being processed by the plurality of processors may already be high or the occurrence rate of the processing requests is high. Therefore, the load distributor may not spend time on determining the loads of the individual processors and sorting the processors accordingly. Instead, an arbitrary sequence of the plurality of processors may be formed, and the processing request may be assigned to a first processor in the sequence, which provides processing capacity for the processing request. Hence, the load distributor may assign a processing request to any processor of the plurality of processors, for as long as said processor provides the capability to process the request.

In stressed state processing requests may arrive at the load distributor at high rate. Therefore, embodiments may seek to reduce or even minimize the time the load distributor needs to assign an incoming processing request to one or more of the plurality of processors. Embodiments may further try to assign a next incoming processing request to a different processor than the one before. Multiple mechanisms can be used in embodiments to achieve a distribution of the incoming processing requests across the plurality of processors.

In some embodiments, an incoming processing request may be assigned to the first processor in the sequence, which provides the according capability. Said processor may, after the assignment, be placed at the end of the sequence. That way, if the next incoming processing request occurs, the sequence can be searched from the beginning and the probability that an early processor in the sequence can provide the requested capacity is high. In other words, in these embodiments whenever a processing request is assigned to a processor, said processor is moved to the end of the sequence. This way, the first processor in the sequence is the one, for which the longest time has passed since its last assignment occurred and which, statistically, may be most likely to be able to serve the requested capability.

In other embodiments the processor may not be moved or repositioned in the sequence at all. In some embodiments, the sequence is formed, and an incoming processing request may be assigned to the first processor in the sequence, which provides the capability. The position of the said processor in the sequence, or the position of the subsequent processor thereafter, may be stored. When another processing request comes in, assignment attempts may start with the next processor in the sequence, such that the sequence is scanned in a ring shape manner. The sequence may then correspond to a ring buffer of pointers to the respective processors, where an assignment pointer, i.e. the position in the buffer at which an assignment attempt starts, moves continuously around the ring.

In other embodiments the load distributor can be operable to sort at least a subset of the plurality of processors based on the load condition to obtain a sorted sequence of processors. Hence, the load distributor may comprise means for sorting, e.g. in terms of a register or memory with addresses or pointers to at least some of the processors. As has already been mentioned above, selecting the processors based on their individual loads, may be omitted in stressed state. The load distributor can be operable, when in relaxed state and the predetermined load criterion corresponds to load concentration, to assign a processing request to a processor with the highest load in the sequence, which provides processing capacity for the processing request. In other words, when in relaxed mode, the load distributor may form a sorted list of at least a subset of the plurality of processors. The processors are sorted in this list or sequence according to the load condition. If the distribution criterion is load concentration, the load distributor may try to load each of the processors up to its individual capacity, before using or switching on another processor. In embodiments, the sequence or list may then be resorted before the next assignment.

Furthermore, in embodiments the load distributor can be operable, when in relaxed state and the predetermined load criterion corresponds to load balancing, to assign a processing request to a processor with the lowest load in the sequence, which provides processing capacity for the processing request. In other words, if the distribution criterion is load balancing, then the load distributor may assign an incoming processing request to the processor with the lowest load in the sequence, it may even switch on an unused processor, before assigning two processing requests to the same processor.

In embodiments, the load distributor can be operable to subdivide the plurality of processors in at least two partitions of processors. A partition of processors may correspond to a subset or a subgroup of processors from the plurality of processors. The load distributor can be operable, when in intermediate state and the predetermined load criterion corresponds to load concentration, to sort a first partition of processors, to assign a processing request to a processor with the highest load in the first partition, which provides processing capacity for the processing request, and in case the first partition lacks a processor with sufficient capacity, to sort a second partition of processors, and to assign a processing request to a processor with the highest load in the second partition, which provides processing capacity for the processing request. In other words, when in intermediate state, there may be some time for sorting, but not as much as in relaxed state.

Therefore, in embodiments the load distributor may sort only a subset of the plurality of processors. This can be carried out by forming subsets or partitions of processors, which are sorted and searched one by one, in order to arrive at an assignment, i.e. to find a processor, which provides sufficient capability, faster than in relaxed mode. When the predetermined distribution criterion corresponds to load concentration, then the processors of a partition are loaded it as much as possible, before another processor is switched on or assigned a processing request. If the load distributor fails to find an according processor in the first partition, it continues the process with the second partition. If the load distributor manages to assign the incoming processing request to a processor of the first partition, the sorting and searching of the second partition can be omitted, time can be saved.

The load distributor can be operable, when in intermediate state and the predetermined load criterion corresponds to load balancing, to sort a first partition of processors, and to assign a processing request to a processor with the lowest load in the first partition, which provides processing capacity for the processing request. In other words, since the predetermined distribution criterion corresponds to load balancing, the load distributor may try to balance the load within a partition. If, however, the first partition cannot provide a processor with a high enough capacity to process the request, the load distributor may continue to seek a processor in the second partition. Thus, in case the first partition lacks a processor with sufficient capacity, the load distributor can be operable to sort a second partition of processors, to assign a processing request to a processor with the lowest load in the second partition, which provides capacity for the processing request. In other words, if the load distributor succeeds in the first partition, time and efforts for sorting and seeking in the second partition can be saved.

In embodiments the load distributor may comprise a plurality of processing units, where a processing unit comprises one or more processors, for example, in terms of a board with multiple processors. The load distributor can be operable to distribute the processing requests among the processing units, and the load distributor can be operable, in case the plurality of processing units lacks capacity for processing a processing request, to forward the processing request to a resource manager comprising further processing capacities. In other words, in embodiments the load distributor may not assign the processing requests on a processor level but on a processing unit level. Hence, embodiments of the load distributor may be employed to distribute the load among actual individual processors, among processing units, where each processing unit may comprise multiple processors, or even among entities, which comprise multiple processing units. For example, a processing unit with processors may be managed and the load distributor may distribute incoming processing requests among the processors of the processing unit.

In another scenario multiple processing units may be gathered to form a cluster, the load distributor may correspond to an intra-cluster resource manager, which distributes the load or incoming processing requests within the cluster. In other words, the load distributor can correspond to an intra-cluster resource manager, managing the resources or the processing requests of multiple processing units in a cluster. The load distributor may correspond to an inter-cluster resource manager, which distributes the load among multiple clusters, each of which may comprise multiple processing units.

Hence, embodiments also provide an intra-cluster resource manager comprising the above described load distributor. The plurality of processors may then correspond to one or more processing units, a processing unit may comprise one or more processors. The intra-cluster resource manager can be operable to provide information on the load condition of the cluster of processing units to an inter-cluster resource manager. In other words, in embodiments multiple load distributors can be comprised in a hierarchical structure. One load distributor may correspond to a local resource manager, managing and distributing the loads of multiple processors of a processing unit, another load distributor may manage and distribute the load on multiple processing units. The first load distributor, also referred to as local resource manager, may therefore report information on the load condition on the processors within its processing unit to the load distributor above, which is also referred to as intra-cluster resource manager. In some embodiments the information on the load condition may correspond to the individual load conditions of the individual processors. Since this may be, especially when the number of processors is high, a large amount of information, average values may be provided as information on the load condition. In other embodiments, the information on the load condition of a cluster may comprise information on an envelope of the load state characteristic in the cluster.

Embodiments may also provide an inter-cluster resource manager comprising the load distributor according to the above description. The inter-cluster resource manager can be operable to distribute the processing requests among a plurality of intra-cluster resource managers comprising the plurality of processors or processing units. In other words, in the hierarchy there may be multiple levels, the above-described intra-cluster resource manager may report information on the load condition in its cluster to an inter-cluster resource manager, which may distribute incoming processing requests among multiple clusters.

In further embodiments a baseband processing unit may comprise an embodiment of the load distributor.

**EP 2 669 798 A1**

Embodiments may provide an apparatus for processing baseband signals of a base station transceiver of a mobile communication system, comprising a plurality of processors and the load distributor according to the above description.

Hence, embodiments may relate to a RAN. In embodiments, the RAN architecture may comprise a base station transceiver, which is composed of a Remote Radio Head (RRH) or RRU, which establishes a radio front end, i.e. which receives and transmits the actual radio signals and establishes at least one radio cell. In some embodiments the RRHs may provide Transmission (Tx), Reception (Rx) and antenna functions and they can be spatially separated from associated BBUs so that the latter can be combined within a cluster of several BBUs. The mobile communication system may, for example, correspond to one of the 3rd Generation Partnership Program (3GPP)-standardized mobile communication networks, as e.g. Long Term Evolution (LTE), an LTE-Advanced (LTE-A), a Universal Mobile Telecommunication System (UMTS) or a UMTS Terrestrial Radio Access network (UTRAN), an Evolved-UTRAN (E-UTRAN), a Global System for Mobile Communication (GSM) or Enhanced Data Rates for GSM Evolution (EDGE) network, a GSM/EDGE Radio Access Network (GERAN), generally an Orthogonal Frequency Division Multiple Access (OFDMA) network, etc., or mobile communication networks with different standards, e.g. Worldwide Interoperability for Microwave Access (WI-MAX).

Embodiments may also provide a method for distributing processing requests in an environment comprising a plurality of processors. The method comprises assigning a processing request to the plurality of processors based on a state of load of the plurality of processors and based on a predetermined distribution criterion.

Embodiments may also provide a computer program having a program code for performing one of the above-described methods, when the computer program is executed on a computer or processor.

Embodiments may provide a flexible adaptation concept that can enable a maximum exploitation of processing resources with high allocation efficiency. This can be achieved through adaptive dynamic resource allocation mechanisms that dynamically adapt to the network state by considering the incoming resource requests and monitoring the available state of resources. The resource allocation strategies applied in the traditional networks of today with rigid interconnectivity may not be able to cope with the new networking paradigms based on virtualized connectivity. E.g., today the flexible allocation of radio resource processing to available processing resources may not be possible due to the fixed association of antennas to base stations. In the future with flexible baseband pools this situation may change.

Embodiments may allow for application in diverse heterogeneous systems with different kinds of quality measures and policies to control and optimize the dynamic resource selection. Embodiments may solve online resource allocation problems in distributed systems like cloud environments comprising mobile and fixed networks. Embodiments may take into account the local processing resources and remotely connected processing resources and they may be tuned to incorporate energy savings and policy rulings. Dynamic calculation of the best resources for a given request may be enabled. Further cost and energy advantages can be achieved when the total number of necessary boards to operate the communication network, e.g. the RAN, can be further reduced. Embodiments may provide optimal or near-optimal resources to execute network requests by adapting the allocation method according to optimization goals and the resource state of the system. Embodiments may further be scalable concerning the number of boards or processors monitored as well as the number of requests processed in parallel.

Embodiments may handle variations of load, link quality or other QoS parameters (processing load, delay, etc.), and failures in an improved or even optimal and policy-based way, and may provide optimal resource usage and permit optimal data transport between concerned boards. Depending on the properties of the processing resources and the applied operator policies, a balance of processing load and also a balance of measurement overhead can be achieved and the proper usage of the scarce resources may even be guaranteed.

Some embodiments comprise a digital control circuit installed within an apparatus for performing a method. Such a digital control circuit, e.g. a digital signal processor (DSP), needs to be programmed accordingly. Hence, yet further embodiments also provide a computer program having a program code for performing embodiments of the method, when the computer program is executed on a computer or a digital processor.

Brief description of the Figures

Some embodiments of apparatuses and/or methods will be described in the following by way of example only, and with reference to the accompanying figures, in which

    Fig. 1 shows an embodiment of a load distributor;

    Fig. 2 illustrates embodiments in a hierarchical structure;

    Fig. 3 illustrates a load margin of an embodiment;

    Fig. 4 illustrates an embodiment with load balancing in relaxed state;

Fig. 5 illustrates an embodiment with load balancing in intermediate state;

Fig. 6 illustrates an embodiment with load balancing in stressed state;

Fig. 7 illustrates an embodiment with load concentration in relaxed state;

Fig. 8 illustrates an embodiment with load concentration in intermediate state;

Fig. 9 illustrates an embodiment with load concentration in stressed state;

Fig. 10 shows a block diagram of a flow chart of an embodiment of a method for distributing processing requests;

Fig. 11 shows a block diagram of a flow chart of another embodiment of a method for distributing processing requests; and

Fig. 12 illustrates quantization and a sampling example of a state of load in an embodiment.

Description of Embodiments

Various example embodiments will now be described more fully with reference to the accompanying drawings in which some example embodiments are illustrated. In the figures, the thicknesses of lines, layers and/or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

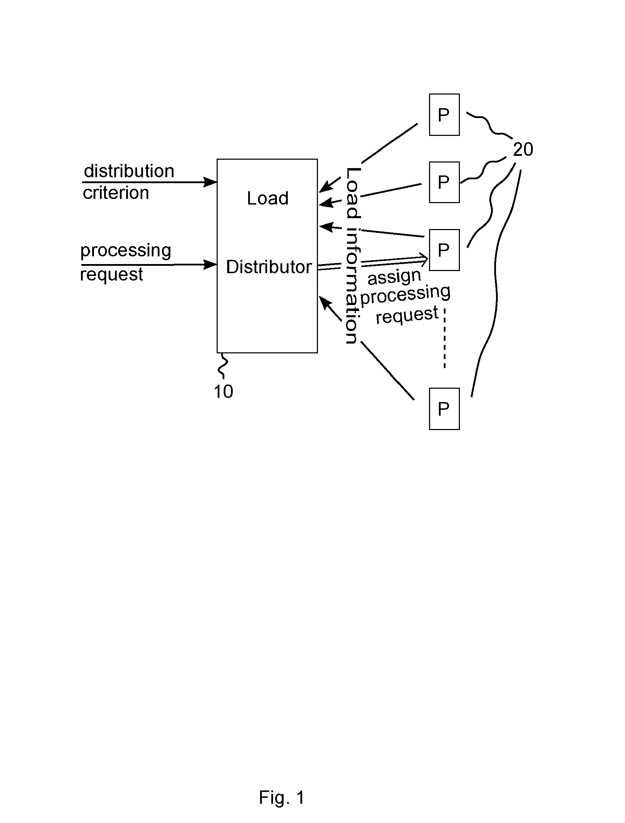

Fig. 1 illustrates an embodiment of a load distributor 10 for distributing processing requests in an environment comprising a plurality of processors 20. The load distributor 10 is operable to assign a processing request to the plurality of processors 20 based on a state of load of the plurality of processors 20 and based on a predetermined distribution criterion. The plurality of processors 20 is shown in the embodiment of Fig. 1 as a number of single processors 20, the plurality of processors 20 may comprise further components or may be structured differently as the following embodiments will show.

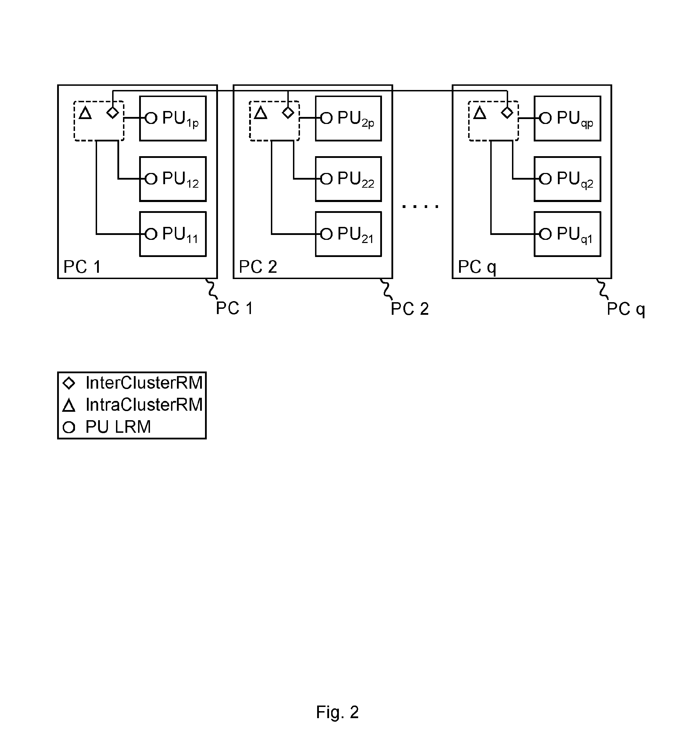

In the following, embodiments will be described, which address the more general online allocation problem, where resource allocation requests are assigned to available resources when they arrive without a-priori knowledge of their size and sequence. The off-line allocation problem, where all requests over a certain period of time are known, is a special case of the online allocation problem and allows a global allocation optimum to be calculated for that very period of time. Fig. 2 illustrates embodiments in a hierarchical structure. Fig. 2 shows a number of Processing Clusters PC1, PC2, ..., PCq. Each of the processing clusters comprises one or more Processing Units ($PU_{11}$, $PU_{12}$, $PU_{1p}$, $PU_{21}$, $PU_{22}$, $PU_{2p}$, $PU_{q1}$, $PU_{q2}$, $PU_{qp}$). It is to be noted that for simplicity purposes each of the PCs in Fig. 2 comprises the same number p of PUs, in other embodiments different PCs may comprise a different number of PUs, correspondingly, each PU may comprise a different number of processors, which can also vary in their type. Moreover, Fig. 2 shows that each of the PUs comprises a Local Resource Manager (LRM), which is indicated by circular symbols. Moreover, the PUs of a PC are managed by an Intra-Cluster Resource Manager (IntraClusterRM), which is indicated in Fig. 2 by triangular symbols. Furthermore, Fig. 2 shows Inter-Cluster Resource Managers (InterClusterRM), which are represented by diamond shaped symbols.

Each of the hierarchical administration components may comprise a load distributor 10 in line with Fig. 1. That is to say, the InterClusterRM, the IntraClusterRM, and/or the LRM of Fig. 2 may comprise a load distributor according to Fig. 1. Hence, the IntraClusterRM can comprise a load distributor, and the plurality of processors 20 may correspond to a cluster of PUs, a PU may comprise one or more processors. The InterClusterRM may also comprise a load distributor. The InterClusterRM can be operable to distribute the processing requests among a plurality of IntraClusterRMs comprising the plurality of processors.

In the following embodiment the resource requests are first processed by the IntraClusterRMs, at which they arrive. An IntraClusterRM controls the internal resources of an PC comprising a multiplicity of PUs, where each PU contains one or multiple processors. Such a cluster can, for example, correspond to a virtual MultiSite MultiStandard BaseBand Unit (MSS-BBU) in a cloud-RAN or a data center or any similar virtual pool of resources.

Some embodiments are applied in a mobile cloud radio access network scenario. The decoupling of the BBUs from the RRUs may allow for collecting the BBU resources in a virtual baseband processing pool and flexibly assign them according to the arriving requests. Hence, an embodiment of an apparatus for processing baseband signals of a base station transceiver of a mobile communication system may accordingly comprise a plurality of processors 20 and the above described load distributor 10. Another application of an embodiment may be a data center scenario where the processing resources within the data centers are aggregated in a virtual pool and dynamically assigned to incoming requests.

Coming back to Fig. 2 an IntraClusterRM may interoperate tightly with the InterClusterRM of each processing cluster $PC_i$, $i = 1, .., q$. The LRMs, which each comprise a load distributor 10, monitor the resources of the processors on each PU and report the current resource state per push implementation to the IntraClusterRMs. If the available internal resources of a processing cluster are not sufficient to meet a resource request, the Intra-ClusterRM sends the request to the collocated InterClusterRM for remote processing. The InterClusterRM then sends the request to its peer InterClusterRMs on other PCs it interacts with.

In the following, some theoretical background will be illuminated. Given a service request S that maps to a set $R$ of $k$ resource requests $r_i$

$$R = \{r_1, r_2, ..., r_k\},$$

some embodiments map the k resource requests onto a set of $n$ processors each with a capacity $p_i$

$$P = \{p_1, p_2, ..., p_n\},$$

where

$$0 < r_i <= p_j,$$

such that the necessary number of processing units is minimized, or such that the processing load on all processing units is balanced. Hence, in this embodiment the predetermined distribution criterion corresponds to a load balancing criterion or a load concentration criterion. Other optimization goals like minimization of the overall serving time for requests, or energy optimal strategies can also be taken into account in other embodiments.

An example in an embodiment would be a service request of 1 Mbps DL traffic at a Channel Quality Indicator (CQI) value of 15 for a wireless transmission link in a cell of an LTE or LTE-A system. The resources required to fulfill the request depend on the current state of the connection denoted by the CQI value reported by User Equipment (UE) as, for example, a mobile transceiver. The resources required may also depend on the UE capability, e.g. if the UE category does only support up to 384 kbps, then less resources will be needed in the cell as compared to when the UE supports 14,4 Mbps. The needed resources can depend on the technique used, like Multiple-Input-Multiple-Output (MIMO), CoOperative MultiPoint (COMP), etc. This can lead to the allocation of different processing resources in the wireless access network, like general purpose Central Processing Units (CPUs), Digital Signal Processors (DSPs), Field Programmable Gate Arrays (FPGAs), Application Specific Integrated Circuits (ASICs), etc. and related links between these elements.

In more detail, the example looks as follows:

Let a tuple of PUs ($p_1$, $p_2$, $p_3$, $p_4$, $p_5$, ...) be associated with the hardware types (CPU_type_1, DSP, FPGA, ASIC, CPU_type_2, ...), respectively. The mobile access network uses a set of parameters, e.g. a Transport Format Identifier (TFI) or a CQI or the like and a mapping table or lookup function to define first a tuple ($r_1$, $r_2$, $r_3$) of needed resources for fulfilling the service request S. The tuple ($r_1$, $r_2$, $r_3$) could be $r_1$ = "I need 1 MFLOPS on a CPU_type_1", $r_2$ = "I need 1/3 of a DSP", $r_3$= "I need 1/5 of an FPGA". $r_1$ could be needed for the execution of a protocol, $r_2$ for the execution of a user PHYsical channel (PHY), $r_3$ for the execution of a Cell PHY. Such a resource request tuple ($r_1$, $r_2$, $r_3$) can then be mapped easily onto the existing processors ($p_1$, $p_2$, $p_3$, $p_4$, $p_5$, ...), if there is free capacity available on these PUs or processors. E.g. ($p_1$, $p_2$, $p_3$) could be the 3 resources that can fulfill the need. Note that also a very fast general purpose CPU - e.g. *here $p_5$* - could take over the complete resource request tuple ($r_1$, $r_2$, $r_3$), i.e. the task of a DSP and an FGPA if it works fast enough in the future.

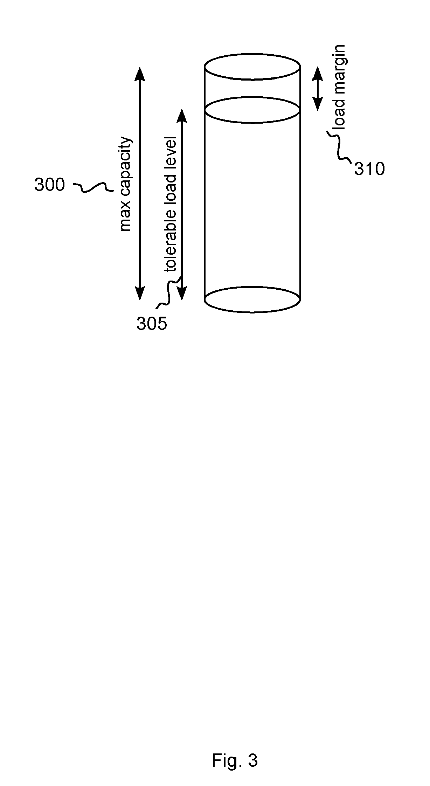

Two factors with significant impact on the performance of resource allocation algorithms are the request size $r_i$ and arriving order of different request sizes. Another factor is the inter-arrival time of the respective requests. To cope with the operational load fluctuations, a load margin for the processors can be defined as depicted in Fig. 3, for example,

$$load\ margin = 10\%\ of\ maximum\ capacity$$

$$tolerable\ load\ level = maximum\ capacity - load\ margin$$

Fig. 3 illustrates a processing capacity view chart illustrating the maximum capacity 300, a tolerable load level 305 and the load margin 310 of a processor. If the load on a processor exceeds the tolerable load level 305, the IntraClusterRM assigns a new coming request either to other processors, or if no processor in the PC can afford the request, it triggers the InterClusterRM to start a remote inter-cluster resource allocation procedure.

The network state or load is measured in the following embodiment by the average inter-arrival time of requests compared to the average processing time of the requests. The load distributor 10 is operable to distinguish at least two different states of load of the plurality of processors 20. One of the at least two states corresponds to a relaxed state and another one of the at least two states of load corresponds to a stressed state. The processing load of the plurality of processors is higher in the stressed state than in the relaxed state. The occurrence rate of the processing requests is higher in the stressed state than in the relaxed state. The average inter arrival time of the processing requests is shorter in the stressed state than in the relaxed state. A third state of load corresponds to an intermediate state, in which the processing load of the plurality of processors 20 is higher than in the relaxed state and lower than in the stressed state. The occurrence rate of the processing requests in the intermediate state is higher than in the relaxed state and lower than in the stressed state. The average inter arrival time of the processing requests is shorter in the intermediate state than in the relaxed state and longer than in the stressed state.

Hence, in the embodiment the following three states or conditions are distinguished by the load distributor 10:

1. Relaxed condition on a PC, wherein an

$$average\ inter\text{-}arrival\ time >> average\ processing\ time;$$

it never comes to remote inter-cluster resource allocation;
2. Intermediate condition on a PC, wherein an

$$average\ inter\text{-}arrival\ time \sim average\ processing\ time;$$

it may sometimes come to remote inter-cluster resource allocation;

3. Stress condition on a PC, wherein an

$$average\ inter\text{-}arrival\ time << average\ processing\ time;$$

it comes to remote inter-cluster resource allocation.

In the embodiment, the resource allocation efficiency is increased by applying the cloud paradigms on the algorithmic design. That is, the rigidity of the resource allocation is broken up and it is dynamically adapted to the current state of the system. Two opposite resource allocation targets are differentiated, which can form the basis of embodiments with adaptive and dynamic resource allocation mechanisms. The first one is load balancing, where the goal is to distribute the processing load uniformly on all available processing units in order to avoid local load peaks and bottlenecks on individual processing units. This increases the availability and scalability of the system and prevents bottlenecks. The second one is load concentration, where the goal is to concentrate the processing load on as few as possible processing units in order to reduce power consumption and inter-PU communication.

For achieving the above targets embodiments dynamically adapt the allocation algorithms to the network condition as defined above.

1. Relaxed condition, in this case the embodiment prioritizes the optimization of the resource efficiency compared to resource allocation speed;

2. Intermediate condition, in this case the optimization of the resource efficiency is as important as the resource allocation speed;

3. Stress condition, in this case the embodiment prioritizes the optimization of the processing speed compared to resource efficiency.

For the realization of the two targets described above, embodiments make use of online resource allocation policies like Next Fit, Best Fit, and Worst Fit if necessary. Embodiments using an adaptive dynamic resource allocation algorithm may exploit the complementary advantages of the algorithms by dynamically switching between them on basis of request and resource monitoring.

For load balancing, embodiments may use variations of the Worst Fit algorithm and the Next Fit algorithm. The Worst Fit algorithm selects the largest possible free capacity that the request can be assigned to. The Next Fit is a First Fit algorithm with a revolving pointer. Like the First Fit algorithm it starts at the beginning of a processor array or sequence and goes along the array until the first processor that can satisfy the request is found. Then the search pointer is advanced to the next array element after this processor. Thus the next allocation begins searching from where the previous cycle finished. The rationale of this mechanism is to avoid the accumulation of small fragments at the beginning of the processor array.

For load concentration embodiments may use variations of the Best Fit algorithm and the Next Fit algorithm. The Best Fit algorithm selects the smallest free capacity that can afford the request. In the following, details of an embodiment with adaptive dynamic resource allocation will be described. All allocation procedures are based on the same common start phase, in which a service request S arrives at the IntraClusterRM, cf. Fig. 2, comprising the load distributor 10. The IntraClusterRM retrieves the resource state on each processor on each intra-cluster PU.

The IntraClusterRM assigns the requests to the appropriate intra-cluster resources based on the resource allocation targets described above. The first target or predetermined distribution criterion is load balancing. The aim of load balancing is the homogeneous distribution of load on all available processors. It tries to keep the load on all processors, as far as possible, at approximately the same level.

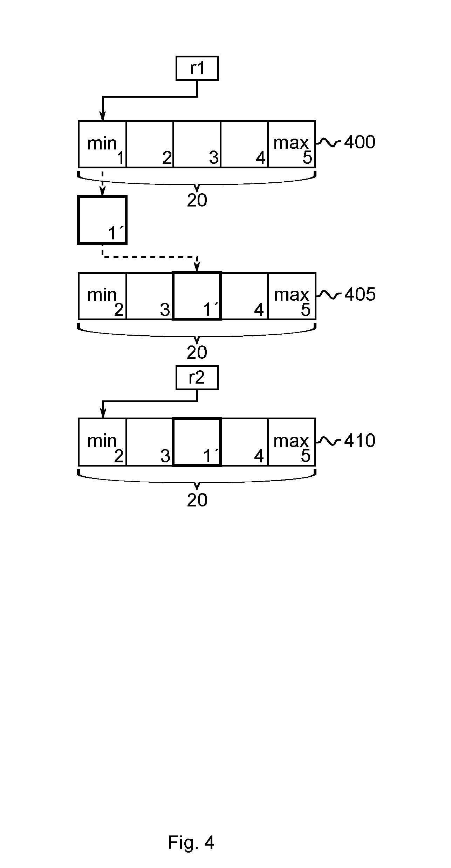

The load distributor 10 is operable to sort at least a subset of the plurality of processors 20 based on their load condition to obtain a sorted sequence of processors. The load distributor 10 is further operable, when in relaxed state and the predetermined load criterion corresponds to load balancing, to assign a processing request to a processor with the lowest load in the sequence, which provides processing capacity for the processing request. That is to say, the IntraClusterRM cares about the optimization of the resource efficiency without considering the resource allocation speed. It has enough time to scan the entire processor list. Fig. 4 illustrates an embodiment with load balancing in relaxed state. Fig. 4 shows three sequences of sorted processors 400, 405, and 410, corresponding to three subsequent steps as carried out by the load distributor 10 in the present embodiment. Here and in the following, processors of the plurality of processors 20 are numbered individually as 1, 2, 3, 4, and 5. The IntraClusterRM, after having received the processing request r1

I. scans the processor list and retrieves the load state on all processors 1, 2, 3, 4, 5;
II. compiles a sorted array or sequence 400 mapping processor loads onto processors with minimum load at the beginning of the array 400;
III. assigns the request to the first element 1 of the array 400, if it can afford it.
IV. triggers the remote inter-cluster resource allocation if this processor in the array cannot afford the request.

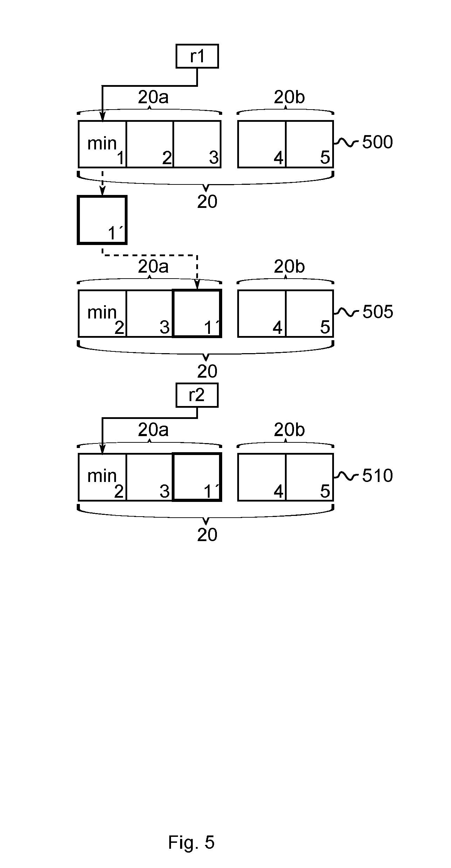

This is the Worst Fit algorithm, which is resource efficient but not very fast due to the scanning and sorting of the entire array 400. But time efficiency has a lower priority in relaxed network condition.
As it is also shown in Fig. 4, before the load distributor 10 assigns a second processing request r2, the array is sorted again, resulting in the updated sequence 405. The processor 1, which was assigned the first processing request 1, now has a changed load or capacity, which is indicated as processor 1' in Fig. 4. In the updated array 405 the processor 1' is on the third place from the beginning, i.e. now has the third lowest load state. The assignment procedure of the second processing request r2 then starts on the updated sequence 410, as indicated at the bottom of Fig. 4.
When in intermediate condition or state, the load distributor is operable to subdivide the plurality of processors 20, comprising individual processors 1, 2, 3, 4, 5, in at least two partitions of processors 20a and 20b, as it is shown in Fig. 5, which illustrates an embodiment with load balancing in intermediate state. The IntraClusterRM comprising the load distributor 10 takes care of the resource efficiency as well as of the allocation speed. Therefore it divides the processor list 20 into partitions 20a, 20b and scans only a partition 20a of the processor list 20 for sorting. Fig. 5 shows three sequences 500, 505, 510 of partitioned processors, illustrating the process.
That is, the load distributor 10 divides the processor list 20 into q partitions (with q, for example, a common divisior 2 <= q < m, where m is the number of processors in the intra-cluster. In the embodiment illustrated in Fig. 5 q=2 and m=5. q can be dynamically adapted by the IntraClusterRM, the load distributor 10, respectively). Thus, for each request the load distributor 10 only goes through a subset of processors 20a to sort the load states among these processors. If the partitions are of equal size, then only 1/q processors are processed. In the embodiment illustrated in Fig. 5 only 3 processors 1, 2, 3, i.e. 3/5 of the plurality of processors 20, have to be checked.
As shown by sequence 500 in Fig. 5, the IntraClusterRM

I. divides the processors 20 into q (in Fig. 5 q=2) partitions 20a, 20b;
II. scans a partition 20a and retrieves the load state on the processors 1, 2, 3in the partition 20a;
III. compiles a sorted array 20a in the partition 20a mapping processor loads onto processors 1, 2, 3;
IV. assigns the request r1 to the first element, processor 1, of the array of the partition 20a, processor 1 being the processor with the minimum load in partition 20a;
V. starts with the next partition 20b and goes to step II if the processor at first position in the array 20a cannot afford the request;
VI. triggers the remote resource allocation if no processor at a first position 1, 4 in a partition 20a, 20b can afford the request.

If the first processor 1 of the first partition 20a can process the request it's load status changes. Sequence 505 shows the situation after the first assignment. The processor with the minimum load in partition 20a is now processor 2 and processor 1' has the highest load. If a second processing request 2 is received, the above procedure starts over again, this time based on the sequence 510, as indicated at the bottom of Fig. 5.
Note that the best sorting algorithms may have a complexity of $n \log n$. That is to say, for partitioning, the total complexity of sorting may reduce from $n \log n$ to:

$$q \frac{n}{q} \log \frac{n}{q} = n \log \frac{n}{q}.$$

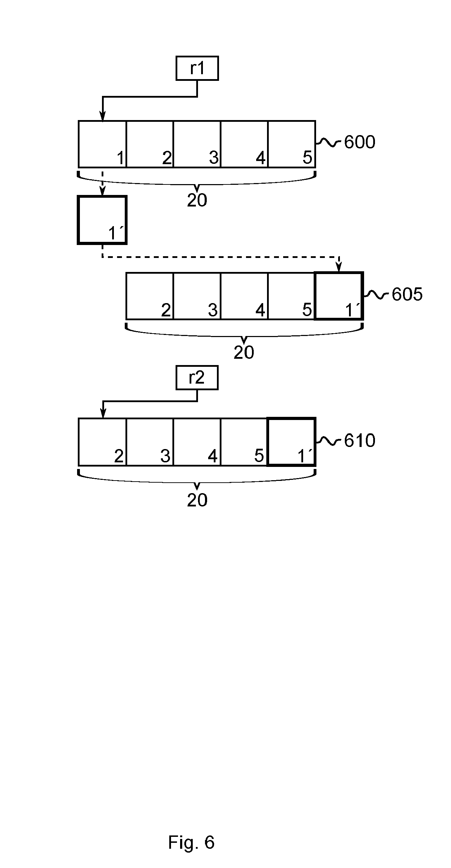

Fig. 6 illustrates an embodiment with load balancing in stressed state or stress condition. Fig. 6 shows three sequences 600, 605, 610 of the plurality of processors 20, which are individually numbered 1, 2, 3, 4, 5. The load distributor 10 is operable, when in stressed state, to form a sequence 600 of at least a subset of the plurality of processors 20, to assign a processing request r1 to a first processor 1 in the sequence 600, which provides processing capacity for the processing request r1. After assigning the request 1 to processor 1', the processor is repositioned in the sequence 605. In the embodiment shown in Fig. 6 processor 1 is replaced to the end of the sequence 605.
In this situation, the IntraClusterRM cares about the maximization of the allocation speed without considering the resource efficiency. It has no time for sorting. The IntraClusterRM

> I. assigns the request r1 to the first element, processor 1, of the array 600;
> II. goes to the next element, processor 2, if the request cannot be afforded by processor 1;
> III. shifts this processor 1' to the end of the array 605.
> IV. goes with the next request r2 to step I, as indicated by sequence 610.
> V. triggers remote inter-cluster resource allocation of no processor 20 can afford the request.

This algorithm is based on the Next Fit mechanism, which is fast but suboptimal in resource efficiency. For example, a small resource request can be assigned to a processor with minimum load. Then this processor is shifted to the end of the processor array and may wait in an almost idle state until it again receives a new a job. The other drawback of this mechanism is that due to lack of time it is not possible to compare the resource states of different processors with each other to make a decision for balancing their loads. A prerequisite of any load balancing strategy may be the scanning of the loads of the processors that take part in the load balancing process, for which in the present embodiment, there is no time given the stressed condition. In another embodiment the load distributor 10 may, instead of repositioning the processor 1' to the end of the sequence 605, begin a later assignment r2 of another processing resource subsequent to the first processor in the sequence 600. That is to say, alternatively, the load distributor may start the assignment procedure of processing request r2 using the sequence 600 at the top of Fig. 6, but starting with processor 2, i.e. using the sequence 600 in a ring-like manner.

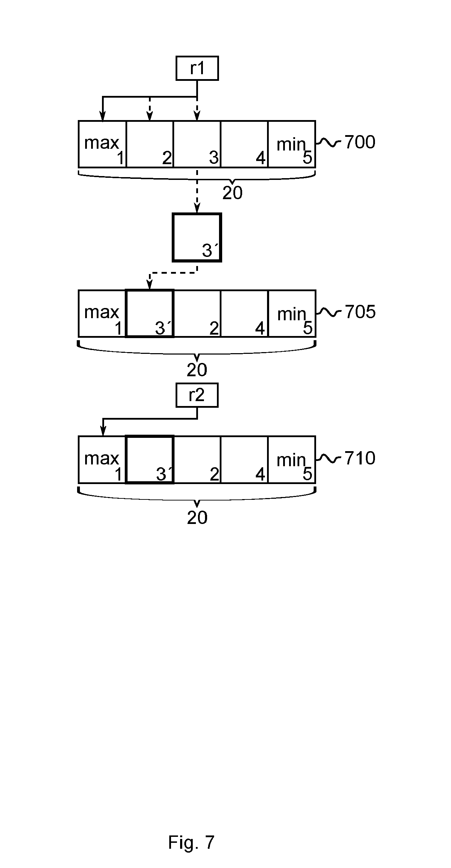

In following an embodiment will be further described when the predetermined load criterion is load concentration. Fig. 7 illustrates an embodiment with load concentration in relaxed state. The load distributor 10 is operable to sort at least a subset of the plurality of processors 20 based on their load condition to obtain a sorted sequence 700 of processors. Note that Fig. 7 shows the sequence of processors 20, wherein processor 5 has the minimum load. The load distributor 10 is operable, when in relaxed state and the predetermined load criterion corresponds to load concentration, to assign a processing request r1 to a processor 3 with the highest load in the sequence, which provides processing capacity for the processing request r1.

In relaxed condition the IntraClusterRM cares about the optimization of the resource efficiency without considering the resource allocation speed. It has enough time to scan the entire processor list 20. The IntraClusterRM

> I. scans the processor array 20 and retrieves the load state on all processors 1, 2, 3, 4, 5;
> II. compiles a reverse-sorted array 700 mapping processor loads onto processors 1, 2, 3, 4, 5 (maximum load at the beginning of the array);
> III. assigns the request r1 to the first element of the array if it can afford the request; otherwise it tries it with the next processor (and succeeds in Fig. 7 with processor 3) in the array 700;
> IV. triggers the remote inter-cluster resource allocation if the request would exceed the tolerable load level of all processors 20 in the array 700.

This Best Fit algorithm is resource efficient but may lead to degradation of performance speed due to capacity fragmentation (small capacity holes) at the beginning of the processor array, which reduces the probability of successful resource allocation at first assignment. However in the relaxed phase there is no need to degrade the resource efficiency to reach a higher resource speed. Hence, before a subsequent second request r2 is assigned, the sequence can be resorted resulting in sequence 705 in Fig. 7, based on which the next assignment process can be carried out, cf. 710 in Fig. 7.

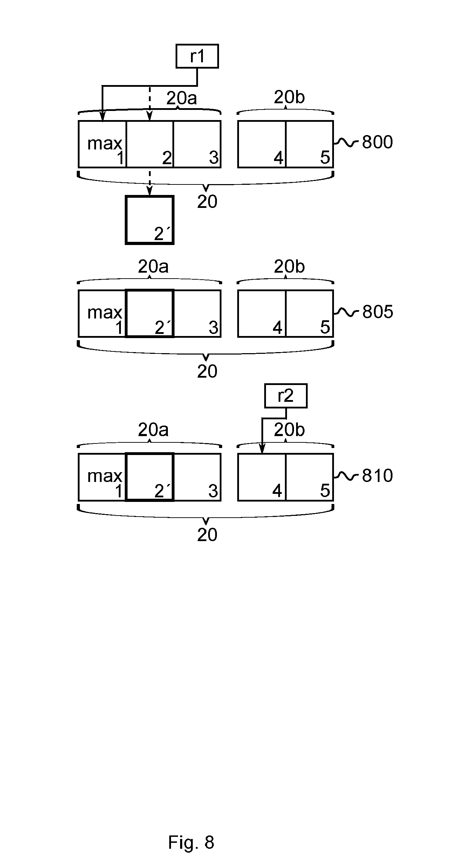

Fig. 8 illustrates an embodiment with load concentration in intermediate state. The load distributor 10 in the IntraClusterRM is operable to subdivide the plurality of processors 20 in at least two partitions 20a, 20b of processors 1, 2, 3 and 4, 5. The load distributor 10 is further operable, when in intermediate state and the predetermined load criterion corresponds to load concentration, to sort a first partition 20a of processors 1, 2, 3, to assign a processing request r1 to a processor 2 with the highest load in the first partition 20a, which provides processing capacity for the processing request r1. In case the first partition 20a lacks a processor with sufficient capacity, the load distributor 10 is further operable to sort a second partition 20b of processors 4, 5, to assign the processing request r1 to a processor with the highest load in the second partition 20b, which provides processing capacity for the processing request r1.

When in intermediate condition the IntraClusterRM takes care of the resource efficiency as well as of the allocation speed. Therefore it divides the processor list 20 into partitions 20a, 20b and scans only a partition 20a of the processor list 20 for sorting, which is indicated by sequence 800 in Fig. 8. That is, it may divide the processor list 20 into q partitions (with q a common divisor $2 <= q < m$, where m is the number of processors in the intra-cluster, q can be dynamically adapted by the IntraRM). Thus, for each request it may only go through 1/q processors to sort the load states among these processors, similar considerations apply as were pointed out above with respect to Fig. 5.

The IntraClusterRM

I. divides the processors 20 into q partitions 20a, 20b (in Fig. 8 m=5, q=2);

II. scans a partition 20a and retrieves the load state on the processors in the partition 20a;

III. compiles an inversely sorted array 700 in the partition 20a mapping processor loads onto processors;

IV. assigns the request r1 to the first element of the array of the partition 20a, which can afford the request r1, processor 2 in Fig. 8;

V. starts with the next partition 20b and goes to step II if there is no processor in the first partition 20a, which can afford the request r1;

VI. triggers the remote resource allocation if no processor in any partition 20a, 20b can afford the request r1.

Regarding the sorting complexity the same considerations as indicated above for Fig. 5 apply. Fig. 8 illustrates in sequence 805 that processor 2', having been assigned the first request r1, keeps its load based position among the processors of partition 20a. Sequence 810 illustrates the assignment of a subsequent second processing request r2, when the above step V. applies, i.e. it is assumed that none of the processors of the first partition 20a can afford the second request r2 and the load distributer 10 checks the second partition 20b for assigning the second request r2.

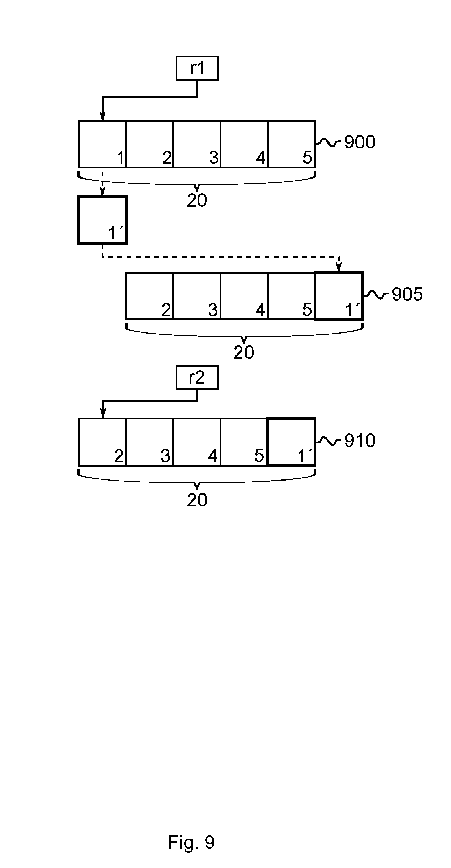

Fig. 9 illustrates an embodiment with load concentration in stressed state. In this situation load distributor 10 is operable, to form a sequence 900 of at least a subset of the plurality of processors 20, to assign a processing request r1 to a first processor 1 in the sequence 900, which provides processing capacity for the processing request. Subsequently the processor 1 can be replaced to the end of the sequence 905, or a later assignment of another processing resource r2 may begin subsequent to the first processor 1 in the sequence 900. Hence, a similar behavior results as it was described above for Fig. 6. When in stress condition the IntraClusterRM cares about the maximization of the allocation speed without considering the resource efficiency. It has no time for scanning the array 20 and sorting the loads. The IntraClusterRM

I. assigns the first request r1 to the first element 1 of the array 900;

II. goes to the next element 2 if the request r1 cannot be afforded by this processor 1;

III. shifts this processor 1' to the end of the array 905;

IV. goes with the next request r2 to step I, based on the new sequence as indicated by 910;

V. triggers remote inter-cluster resource allocation if no processor can afford the request r1.

This algorithm is based on the Next Fit mechanism, which is fast but suboptimal in resource efficiency. For example, a small resource request can be assigned to a processor 1 with minimum load. Then this processor 1' is shifted to the end of the processor array 905 and may wait in an almost idle state until it again receives a new a job. The Next Fit mechanism may also be applied using a ring-like structure of the sequence as explained above.

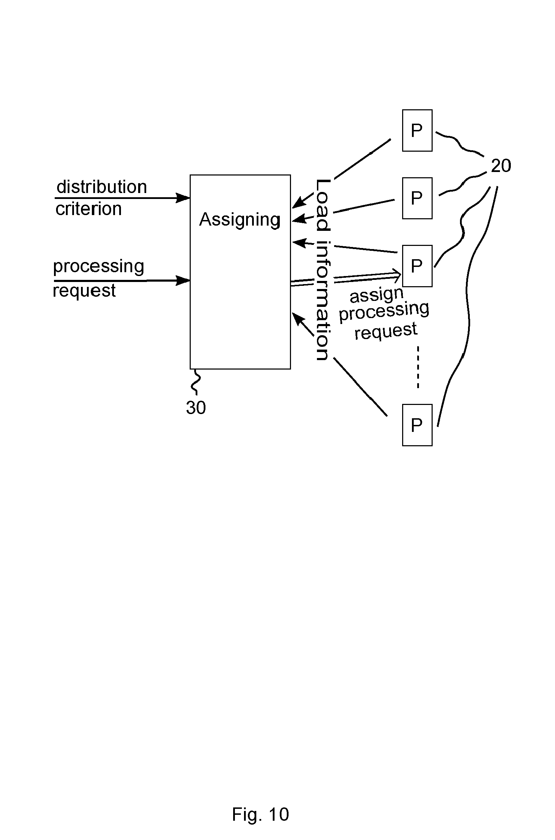

Fig. 10 shows a block diagram of a flow chart of an embodiment of a method for distributing processing requests. The method distributes processing requests in an environment comprising a plurality of processors 20 and comprises assigning 30 a processing request to the plurality of processors 20 based on a state of load of the plurality of processors 20 and based on the predetermined distribution criterion.

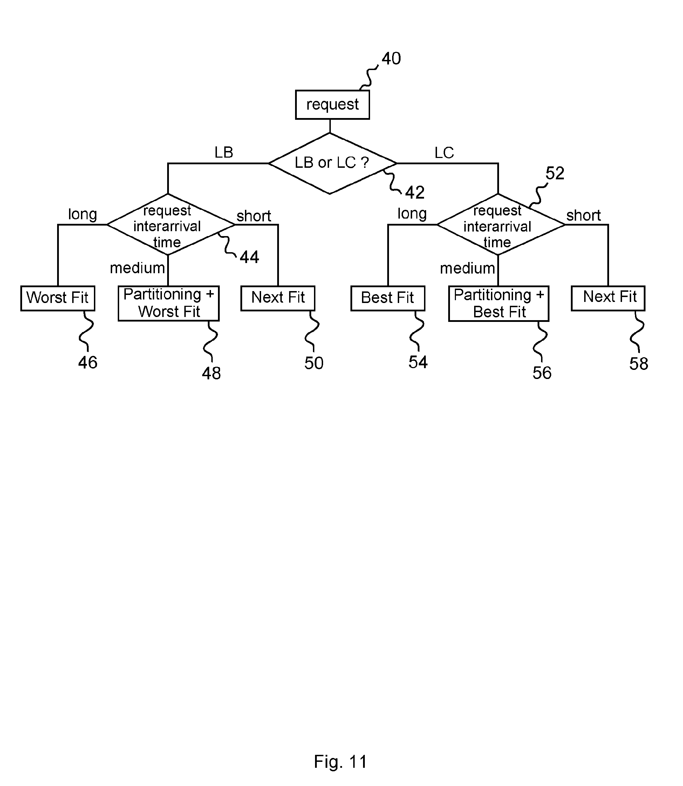

Fig. 11 shows a block diagram of a flow chart of another embodiment of a method for distributing processing requests. The embodiment of Fig. 11 shows a flow chart for dynamic adaptation. In a first step 40 a processing request occurs. Subsequently in step 42 it is checked whether the predetermined distribution criterion corresponds to load balance or load concentration. The case of load balance is described first. In case the predetermined distribution criterion is load balance the request inter-arrival times are checked in step 44 in order to determine the state of load of the plurality of processors. According to the above description, if the inter-arrival time is long, relaxed state is detected and a Worst Fit assignment procedure 46 is carried out, cf. Fig. 4. If the inter-arrival time is medium, intermediate state is detected and a Worst Fit and partitioning assignment procedure 48 is carried out, cf. Fig. 5. If the inter-arrival time is short, stressed state is detected and a Next Fit assignment procedure 50 is carried out, cf. Fig. 6.

If in step 42 load concentration is determined as predetermined distribution criterion, the state of load is detected in subsequent step 52 based on the inter-arrival time of the processing requests. According to the above description, if the inter-arrival time is long, relaxed state is detected and a Best Fit assignment procedure 54 is carried out, cf. Fig. 7. If the inter-arrival time is medium, intermediate state is detected and a Best Fit and partitioning assignment procedure 56 is carried out, cf. Fig. 8. If the inter-arrival time is short, stressed state is detected and a Next Fit assignment procedure 58 is carried out, cf. Fig. 9.

The resource allocation concepts as introduced for the embodiments above may have the complementary property that they are rather resource efficient or rather fast. Therefore the decision between these two types may depend on the network condition, distinguished in the present embodiment by the three states, relaxed, intermediate and stressed. Resource efficient algorithms that are based on sorting have a time complexity of $O(n \log n)$. This effort does not become large for a small pool with few processing units, like in the MSS-BBUs, however it may vastly degrade the allocation efficiency in large pools with numerous processing units, like in data centers. Therefore in stress phases the sorting can be skipped to avoid the growth of allocation queues with the consequence of suboptimum resource efficiency. Self-balancing Binary Search Trees (BST) with a complexity of O(log $n$) - as far as no multiple values (processor identities) have the same key (processor load) - might be implemented to enhance the sorting procedure.

As has been mentioned above, the load distributor 10 may comprise a plurality of processing units and a processing unit may comprise one or more processors. The load distributor 10 can be operable to distribute the processing requests among the processing units. The load distributor 10 can be operable, in case the plurality of processing units lacks capacity for processing a processing request, to forward the processing request to a resource manager comprising further processing capacities.

In embodiments each processor or processing unit may comprise a set of different processor types. The LRM of each processor or processing unit may push the resource state or information thereon on each processor to the IntraClusterRM. If a request $r_k$ comprises multiple requests concerning diverse layers, then the IntraClusterRM assigns each of the multiple requests to the appropriate processor according to the allocation algorithms introduced above. The case where the requests (layers) of a request should not be decoupled and should be processed monolithically, depicts a special case of the above general case with the constraint that all requests have to be processed on the same PU. This constraint can easily be considered by the IntraClusterRM by treating the multiple coupled requests as a single combined request.

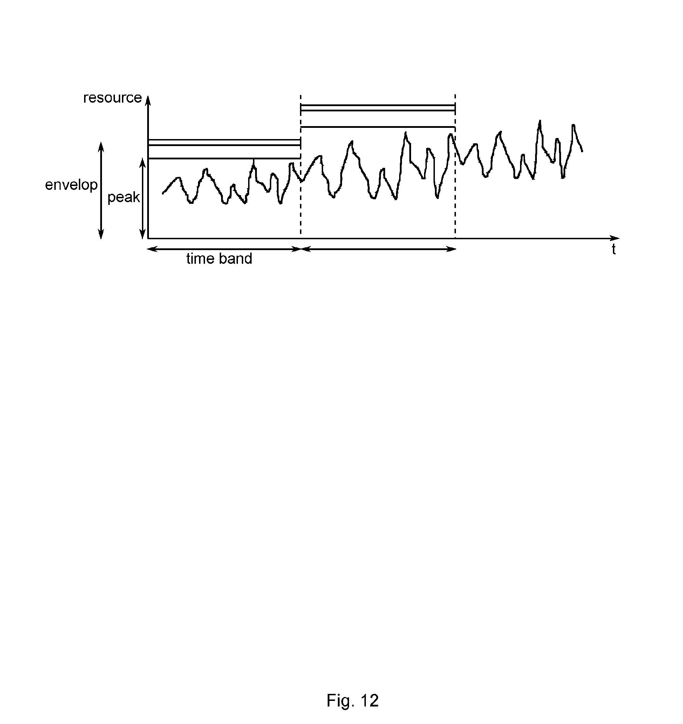

Fig. 12 illustrates a quantization and sampling example of a state of load in an embodiment. Fig. 12 shows a view chart depicting the state of load or resource consumption of a processor or processing unit versus time. Fig. 12 further illustrates the variances of the load with their peak and envelope values. The envelope lies higher than the peak value, e.g. the load margin may lie in between. In embodiments the intra-cluster resource manager can be operable to provide information on a load condition of the cluster of processing units to an inter-cluster resource manager and the information on the load condition of the cluster comprises information on an envelope of a load state characteristic in the cluster. Hence, in embodiments in order to decrease the information reporting overhead, reduce the computation costs and cope with the resource state variances the IntraClusterRM may report only the envelop of a current resource state of the PU with maximum available resources to an InterClusterRM. The envelop offset can be dynamically computed via monitoring of the state variances. This technique can be used in embodiments to report the state of load between any of the entities, e.g. from processors to LRMs, from LRM to IntraClauster RM, from IntraClusterRM to InterClusterRM, etc. As shown in Fig. 12 time bands can be used to determine the sampling periods of the envelope values.

Some embodiments may be used in wireless access networks. In this case the resources can comprise different CPU resource types on different boards organized in racks or other clusters. The requests may stem from users that need different communication connectivities for their handsets while they move through the mobile network organized in so called cells. Thereby the processing for cells with high load and for cells with low load can be balanced and the resource efficiency as well as the computation speed can be increased. Moreover, embodiments may be configured for different goals, e.g. energy saving, blocking probability reduction, precedence, reliability, throughput or any combination thereof.

Besides a CPU resource also an Input/Output (IO) resource may be precious in future cloud based applications. Thus, embodiments may take the cost of inter-process communication into account; these may be combined with additional transport costs.

By use of measurements and configuration parameters embodiments may decide in runtime, which resource allocation mechanisms are the most appropriate and should be applied. The measurements can either be taken from the boards in use or by query from the single Intra-ClusterRM of the boards under question. Also there can be a RM internal storage that has stored such data from former measurements or situations. The RM may also collect the needed information and may also carry out quantizing and sampling of the values.

In some embodiments the processing resources or processors are comprised within a data center; they may be merged together in a pool and may be dynamically assigned to incoming requests. Constraints may apply on delay requirements, thus including transport delays towards and from the resource utilized, plus processing delays on the resource itself. Inside a data center a structure similar to Figs. 1 and 2 can be assumed. The interconnection of clusters may be different, e.g. in a fat tree to copy with connection blocking and resilience issues.

Embodiments may process dynamically incoming service requests arising in a communication network, e.g. a RAN, and may map same to a set of processing requests before allocating to a set of interconnected resources. Within the conceived architecture embodiments may enable dynamic allocation of processing tasks to available and monitored processing resources. Algorithm and calculation of the resources happen in the distributed RMs (InterCluster-, IntraClusterRMs and RM clients) for a set of processing boards, whereby one or more of these RMs can take the role of a Master RM that can calculate the current best processing place for each newly incoming task, i.e. assume the role of an embodied load distributor 10. The algorithm may take into account the processing resources under load, the resiliency and load of remotely connected resources and may be tuned to incorporate energy savings and policy rulings.

Hence, embodiments may allow for dynamically calculating the best resource for a given request. Furthermore, cost and energy advantages can be gained when embodiments diminishes the total number of currently used boards and thus of totally needed boards to operate the communication network, e.g. the RAN.

Embodiments may even provide optimal resources to execute network requests by changing the allocation method according to optimization goals, current load and state of the system. Embodiments may be scalable concerning the number of boards monitored as well as to the number of requests processed in parallel. Load changes, link quality changes or other changes in QoS parameters (processing load, delay, ...), as well as failures, may be handled in an optimal and policy based way by embodiments to provide optimal resource usage and permit optimal data transport between concerned boards. Depending on the properties of the processing resources and the applied operator policies, a balance of processing load and also a balance of measurements overhead can be achieved and the proper usage of the scarce resources may even be guaranteed.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is operable for performing a certain function, respectively. Hence, a "means for s.th." may as well be understood as a "means being operable or suited for s.th.". A means being operable for performing a certain function does, hence, not imply that such means necessarily is performing said function (at a given time instant).

The functions of the various elements shown in the Figures, including any functional blocks labeled as "means", "means for sorting", may be provided through the use of dedicated hardware, as e.g. a processor or sorter, as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

Further, it is to be understood that the disclosure of multiple steps or functions disclosed in the specification or claims may not be construed as to be within the specific order. Therefore, the disclosure of multiple steps or functions will not limit these to a particular order unless such steps or functions are not interchangeable for technical reasons. Furthermore, in some embodiments a single step may include or may be broken into multiple sub steps. Such sub steps may be included and part of the disclosure of this single step unless explicitly excluded.

**Claims**

1. A load distributor (10) for distributing processing requests in an environment comprising a plurality of processors (20), the load distributor (10) being operable to assign a processing request to the plurality of processors (20) based on a state of load of the plurality of processors (20) and based on a predetermined distribution criterion.

2. The load distributor (10) of claim 1, wherein the predetermined distribution criterion corresponds to a load balancing criterion or a load concentration criterion.

3. The load distributor (10) of claim 1, being operable to distinguish at least two different states of load of the plurality of processors (20), wherein one of the at least two states corresponds to a relaxed state and another one of the at least two states of load corresponds to a stressed state, wherein the processing load of the plurality of processors is higher in the stressed state than in the relaxed state or wherein an occurrence rate of the processing requests is higher in the stressed state than in the relaxed state.

4. The load distributor (10) of claim 3, wherein a third state of load corresponds to an intermediate state, in which the processing load of the plurality of processors (20) is higher than in the relaxed state and lower than in the stressed state or in which the occurrence rate of the processing requests is higher than in the relaxed state and lower than in the stressed state.

5. The load distributor (10) of claim 3, being operable, when in stressed state, to form a sequence (600; 900) of at least a subset of the plurality of processors (20), to assign a processing request to a first processor in the sequence (600; 900), which provides processing capacity for the processing request, and
for replacing the processor to the end of the sequence, or
for beginning a later assignment of another processing resource subsequent to the first processor in the sequence.

6. The load distributor (10) of claim 3, being operable to sort at least a subset of the plurality of processors (20) based on their load condition to obtain a sorted sequence (400, 700) of processors, wherein
the load distributor (10) is operable, when in relaxed state and the predetermined load criterion corresponds to load concentration, to assign a processing request to a processor with the highest load in the sequence (700), which provides processing capacity for the processing request, and/or wherein
the load distributor (10) is operable, when in relaxed state and the predetermined load criterion corresponds to load balancing, to assign a processing request to a processor with the lowest load in the sequence (400), which provides processing capacity for the processing request.

7. The load distributor (10) of claim 4, operable to subdivide the plurality of processors (20) in at least two partitions (20a; 20b) of processors, wherein
the load distributor (10) is operable, when in intermediate state and the predetermined load criterion corresponds to load concentration, to sort a first partition (20a; 800) of processors, to assign a processing request to a processor with the highest load in the first partition (20a; 800), which provides processing capacity for the processing request, and in case the first partition (20a; 800) lacks a processor with sufficient capacity,
to sort a second partition (20b) of processors, to assign the processing request to a processor with the highest load in the second partition (20b), which provides processing capacity for the processing request,
and/or wherein
the load distributor (10) is operable, when in intermediate state and the predetermined load criterion corresponds to load balancing, to sort a first partition (20a; 500) of processors, to assign a processing request to a processor with the lowest load in the first partition (20a; 500), which provides processing capacity for the processing request, and in case the first partition (20a; 500) lacks a processor with sufficient capacity,
to sort a second partition (20b) of processors, to assign the processing request to a processor with the lowest load in the second partition (20b), which provides processing capacity for the processing request.

8. The load distributor (10) of claim 1, comprising a plurality of processing units, wherein a processing unit comprises one or more processors, wherein the load distributor (10) is operable to distribute the processing requests among the processing units, and wherein the load distributor (10) is operable, in case the plurality of processing units lacks capacity for processing a processing request, to forward the processing request to a resource manager comprising further processing capacities.

9. An intra-cluster resource manager comprising the load distributor (10) of claim 1, wherein the plurality of processors (20) corresponds to a cluster of processing units, a processing unit comprising one or more processors.

10. The intra-cluster resource manager of claim 9, being operable to provide information on a load condition of the cluster of processing units to an inter-cluster resource manager.

11. The intra-cluster resource manager of claim 10, wherein the information on the load condition of the cluster comprises information on an envelope of a load state characteristic in the cluster.

**12.** An inter-cluster resource manager comprising a load distributor (10) of claim 1, wherein the inter-cluster resource manager is operable to distribute the processing requests among a plurality of intra-cluster resource managers comprising the plurality of processors.

**13.** An apparatus for processing baseband signals of a base station transceiver of a mobile communication system, comprising a plurality of processors (20) and the load distributor (10) of claim 1.

**14.** A method for distributing processing requests in an environment comprising a plurality of processors (20), comprising assigning (30) a processing request to the plurality of processors (20) based on a state of load of the plurality of processors (20) and based on a predetermined distribution criterion.

**15.** A computer program having a program code for performing the method of claim 14, when the computer program is executed on a computer or processor.

**Amended claims in accordance with Rule 137(2) EPC.**

**1.** A load distributor (10) for distributing processing requests in an environment comprising a plurality of processors (20), the load distributor (10) being operable to assign a processing request to the plurality of processors (20) based on a state of load of the plurality of processors (20) and based on a predetermined distribution criterion, wherein the load distributor (10) is operable to distinguish at least two different states of load of the plurality of processors (20), wherein one of the at least two states corresponds to a relaxed state and another one of the at least two states of load corresponds to a stressed state, wherein the processing load of the plurality of processors is higher in the stressed state than in the relaxed state or wherein an occurrence rate of the processing requests is higher in the stressed state than in the relaxed state, wherein the load distributor (10) is further operable, when in stressed state, to form a sequence (600; 900) of at least a subset of the plurality of processors (20), to assign a processing request to a first processor in the sequence (600; 900), which provides processing capacity for the processing request, and to replace the processor to the end of the sequence, or to begin a later assignment of another processing resource subsequent to the first processor in the sequence.

**2.** The load distributor (10) of claim 1, wherein the predetermined distribution criterion corresponds to a load balancing criterion or a load concentration criterion.

**3.** The load distributor (10) of claim 1, wherein a third state of load corresponds to an intermediate state, in which the processing load of the plurality of processors (20) is higher than in the relaxed state and lower than in the stressed state or in which the occurrence rate of the processing requests is higher than in the relaxed state and lower than in the stressed state.

**4.** The load distributor (10) of claim 1, being operable to sort at least a subset of the plurality of processors (20) based on their load condition to obtain a sorted sequence (400, 700) of processors, wherein the load distributor (10) is operable, when in relaxed state and the predetermined load criterion corresponds to load concentration, to assign a processing request to a processor with the highest load in the sequence (700), which provides processing capacity for the processing request, and/or wherein the load distributor (10) is operable, when in relaxed state and the predetermined load criterion corresponds to load balancing, to assign a processing request to a processor with the lowest load in the sequence (400), which provides processing capacity for the processing request.

**5.** The load distributor (10) of claim 3, operable to subdivide the plurality of processors (20) in at least two partitions (20a; 20b) of processors, wherein the load distributor (10) is operable, when in intermediate state and the predetermined load criterion corresponds to load concentration, to sort a first partition (20a; 800) of processors, to assign a processing request to a processor with the highest load in the first partition (20a; 800), which provides processing capacity for the processing request, and in case the first partition (20a; 800) lacks a processor with sufficient capacity, to sort a second partition (20b) of processors, to assign the processing request to a processor with the highest load in the second partition (20b), which provides processing capacity for the processing request, and/or wherein the load distributor (10) is operable, when in intermediate state and the predetermined load criterion corresponds to load balancing, to sort a first partition (20a; 500) of processors, to assign a processing request to a processor with the lowest load in the first partition (20a; 500), which provides processing capacity for the processing request, and in case the first partition (20a; 500) lacks a processor with sufficient capacity,
to sort a second partition (20b) of processors, to assign the processing request to a processor with the lowest load in the second partition (20b), which provides processing capacity for the processing request.

**6.** The load distributor (10) of claim 1, comprising a plurality of processing units, wherein a processing unit comprises one or more processors, wherein the load distributor (10) is operable to distribute the processing requests among the processing units, and wherein the load distributor (10) is operable, in case the plurality of processing units lacks capacity for processing a processing request, to forward the processing request to a resource manager comprising further processing capacities.

**7.** An intra-cluster resource manager comprising the load distributor (10) of claim 1, wherein the plurality of processors (20) corresponds to a cluster of processing units, a processing unit comprising one or more processors.

**8.** The intra-cluster resource manager of claim 7, being operable to provide information on a load condition of the cluster of processing units to an inter-cluster resource manager.

**9.** The intra-cluster resource manager of claim 8, wherein the information on the load condition of the cluster comprises information on an envelope of a load state characteristic in the cluster.

**10.** An inter-cluster resource manager comprising a load distributor (10) of claim 1, wherein the inter-cluster resource manager is operable to distribute the processing requests among a plurality of intra-cluster resource managers comprising the plurality of processors.

**11.** An apparatus for processing baseband signals of a base station transceiver of a mobile communication system, comprising a plurality of processors (20) and the load distributor (10) of claim 1.

**12.** A method for distributing processing requests in an environment comprising a plurality of processors (20), comprising assigning (30) a processing request to the plurality of processors (20) based on a state of load of the plurality of processors (20) and based on a predetermined distribution criterion, the method further comprising distinguishing at least two different states of load of the plurality of processors (20), wherein one of the at least two states corresponds to a relaxed state and another one of the at least two states of load corresponds to a stressed state, wherein the processing load of the plurality of processors is higher in the stressed state than in the relaxed state or wherein an occurrence rate of the processing requests is higher in the stressed state than in the relaxed state; when in stressed state, forming a sequence (600; 900) of at least a subset of the plurality of processors (20); assigning a processing request to a first processor in the sequence (600; 900), which provides processing capacity for the processing request; and replacing the processor to the end of the sequence, or beginning a later assignment of another processing resource subsequent to the first processor in the sequence.

**13.** A computer program having a program code for performing the method of claim 12, when the computer program is executed on a computer or processor.

distribution criterion

processing request

Load Distributor

10

Load information

P

P

P

assign processing request

P

20

Fig. 1

Fig. 2

Fig. 3

Fig. 4

r1

20a          20b

| min 1 | 2 | 3 | | 4 | 5 | ∿ 500 |

20

1′

20a          20b

| min 2 | 3 | 1′ | | 4 | 5 | ∿ 505 |

20

r2

20a          20b

| min 2 | 3 | 1′ | | 4 | 5 | ∿ 510 |

20

Fig. 5

Fig. 6

Fig. 7

Fig. 8

r1

1 | 2 | 3 | 4 | 5 ∿ 900

20

1´

2 | 3 | 4 | 5 | 1´ ∿ 905

20

r2

2 | 3 | 4 | 5 | 1´ ∿ 910

20

Fig. 9

Fig. 10

Fig. 11

Fig. 12

**EUROPEAN SEARCH REPORT**

Europäisches
Patentamt

European
Patent Office

Office européen
des brevets

Application Number

EP 12 30 5600

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (IPC) |
| X | WO 01/38972 A1 (MOTOROLA INC [US]) 31 May 2001 (2001-05-31) * page 2 - page 31 * ----- | 1-15 | INV. G06F9/50 |
| X | US 2007/168548 A1 (ATOGI ODUOMOLOGHI M [US] ET AL) 19 July 2007 (2007-07-19) * paragraph [0030] - paragraph [0040]; figure 4 * ----- | 1-15 | |
| A | US 5 881 284 A (KUBO HIDEHITO [JP]) 9 March 1999 (1999-03-09) * column 2 - column 7 * ----- | 1-15 | |
| A | US 2007/143116 A1 (DE ARMAS MARIO E [US] ET AL) 21 June 2007 (2007-06-21) * paragraph [0021] - paragraph [0039] * ----- | 1-15 | |
| A | US 2009/328054 A1 (PARAMASIVAM KARTIK [US] ET AL) 31 December 2009 (2009-12-31) * paragraph [0023] - paragraph [0026] * ----- | 1-15 | TECHNICAL FIELDS SEARCHED (IPC)  G06F |

The present search report has been drawn up for all claims

| Place of search | Date of completion of the search | Examiner |
|---|---|---|
| Munich | 26 October 2012 | Kalejs, Eriks |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**

EP 12 30 5600

This annex lists the patent family members relating to the patent documents cited in the above-mentioned European search report.
The members are as contained in the European Patent Office EDP file on
The European Patent Office is in no way liable for these particulars which are merely given for the purpose of information.

26-10-2012

| Patent document cited in search report | | Publication date | Patent family member(s) | | Publication date |
|---|---|---|---|---|---|
| WO 0138972 | A1 | 31-05-2001 | US 7062556 B1 | | 13-06-2006 |
| | | | WO 0138972 A1 | | 31-05-2001 |
| US 2007168548 | A1 | 19-07-2007 | CN 101005516 A | | 25-07-2007 |
| | | | JP 2007193806 A | | 02-08-2007 |
| | | | US 2007168548 A1 | | 19-07-2007 |
| US 5881284 | A | 09-03-1999 | FR 2740579 A1 | | 30-04-1997 |
| | | | JP 2940450 B2 | | 25-08-1999 |
| | | | JP 9120389 A | | 06-05-1997 |
| | | | US 5881284 A | | 09-03-1999 |
| US 2007143116 | A1 | 21-06-2007 | CN 1988548 A | | 27-06-2007 |
| | | | US 2007143116 A1 | | 21-06-2007 |
| US 2009328054 | A1 | 31-12-2009 | NONE | | |

EPO FORM P0459

For more details about this annex : see Official Journal of the European Patent Office, No. 12/82